# EUROPÄISCHE PATENTSCHRIFT

(11) **EP 0 450 166 B1**
(45) Veröffentlichungstag und Bekanntmachung des Hinweises auf die Patenterteilung: **19.05.1993**
(21) Anmeldenummer: 90123845.1
(22) Anmeldetag: 11.12.1990
(51) Int. Cl.: B60N 2/48

(54) **Kopfstütze für Kraftfahrzeugsitze**
Headrest for a motor vehicle seat
Appui-tête pour sièges de véhicule automobile

(30) Priorität: 13.03.1990 DE 4007929
(43) Veröffentlichungstag der Anmeldung: 09.10.1991
(73) Patentinhaber: PETER BUTZ GmbH & Co Verwaltungs-KG, 40764 Langenfeld (DE)
(72) Erfinder: Butz, Eugen Otto, D-4010 Hilden (DE)
(74) Vertreter: Ostriga, Harald

(56) Entgegenhaltungen:
- DE-A- 3 021 122
- DE-A- 3 530 687

## Beschreibung

Die Erfindung betrifft eine Kopfstütze für Kraftfahrzeugsitze, wie sie entsprechend dem Oberbegriff des Patentanspruchs 1 durch die DE-A-3 530 687 bekanntgeworden ist.

Entsprechend der DE-A-3 530 687 ist der jeweilige obere Endbereich der beiden Tragstangen von mehreren ringförmigen Haftkörpern umgeben, welche aus einem Kunststoff mit vergleichsweise hohen Haft- und Gleitreibungsbeiwerten bestehen können. Der jeweilige ringförmige Haftkörper ist zwischen zwei vertikalen, sich parallel zur Neigeverstellebene erstreckenden Polsterträger-Wänden, einen Reibschluß erzeugend, eingeklemmt. Auf diese Weise kann der Polsterträger bezüglich der Tragstangen zwischen den beiden Endlagen stufenlos neigungsverstellt werden.

Im praktischen Betrieb einer Kopfstütze, deren Tragstangen Haftkörper entsprechend der DE-A-3 530 687 aufweisen, hat es sich herausgestellt, daß der Reibschluß über die zwischen den kooperierenden Reib- bzw. Haftflächen wirkende Normalkraft verhältnismäßig genau eingestellt werden muß. Dieses, um einerseits eine lästige Schwergängigkeit oder gar eine Blockierung und andererseits eine unverträglich leichtgängige Verstellbarkeit zu vermeiden. Dies ist zunächst eine Passungsfrage bei der Herstellung der kooperierenden Teile, die sich aber werkzeugmäßig relativ präzise lösen läßt. Schwierigkeiten könnten aber dann auftreten, wenn der Kunststoff-Polsterträger aus Gründen eines bei starker (insbesondere unfallbedingter) Beanspruchung besseren Energieverzehrs aus einem nachgiebigen Kunststoff, insbesondere aus Polyäthylen, bestehen soll. Der zunächst passungsbedingt vorgegebene Reibschluß ist dann zwar für einige Zeit vorhanden, nimmt jedoch - gegebenenfalls durch Wärmeeinfluß verstärkt - bis auf einen womöglich nicht mehr hinreichenden Wert ab. Andererseits ist die bekannte Kopfstütze wegen ihres einfachen Aufbaus, ihrer kontinuierlichen Verstellweise und des nachgiebigen Kunststoff-Polsterträgers besonders vorteilhaft.

Ausgehend von der eingangs beschriebenen gattungsgemäßen bekannten Kopfstütze (DE-A-3 530 687), liegt der Erfindung die Aufgabe zugrunde, die bekannte Kopfstütze unter Beibehaltung ihres vorteilhaften einfachen und zugleich eine stufenlose Verstellung ermöglichenden Aufbaus so weiterzuentwickeln, daß ihr Polsterträger auch weiterhin aus einem für den Energieverzehr besonders günstigen, nachgiebigen Kunststoff hergestellt werden kann.

Diese Aufgabe wird entsprechend dem Kennzeichenteil des Patentanspruchs 1 gelöst.

Entsprechend der Erfindung wird die Qualität der polsterträgerseitigen Haftfläche entscheidend von einem stabilisierenden Stützkörper bestimmt, welcher vorzugsweise aus Metall besteht aber auch aus einem faserverstärkten bzw. ähnlich verfestigten bzw. stabilisierten Kunststoff hergestellt sein kann. Dieser Stützkörper, welcher dem Haftkörper räumlich zugeordnet ist, ist mindestens an seinen beiden Enden jeweils an einem Widerlager der Polsterträger-Wand, insbesondere an den formstabilen Eckbereichen des Polsterträgers, formschlüssig derart befestigt, daß eine auf Dauer unveränderliche Lage relativ zum Haftkörper gewährleistet ist. Der Stützkörper selbst kann zwar elastisch biegbar, z.B. auch federelastisch biegbar, ausgebildet sein, jedoch muß er beispielsweise trotz Federelastizität so widerstandsfähig sein, daß er von der vom Haftkörper quer zu seiner ebenen Stützfläche ausgehenden Normalkraft zumindest im wesentlichen nicht durchgebogen werden kann. Federelastizität des Stützkörpers ermöglicht jedenfalls dessen federbare Rastmontage am Polsterträger.

Der Stützkörper kann so am Polsterträger befestigt sein, daß die benachbarte Polsterträger-Wand zugleich gegen Durchbiegung gesichert ist.

Der Stützkörper kann mit seiner ebenen Stützfläche parallel zur Haftfläche außen an der Polsterträger-Wand befestigt sein. In diesem Falle ist die Haftfläche von der Innenfläche der Polsterträger-Wand selbst gebildet.

In weiterer Ausgestaltung der Erfindung ist es vorgesehen, den Stützkörper innen an der Polsterträger-Wand anzuordnen bzw. zu befestigen.

Die Befestigung des Stützkörpers - innen oder außen - kann hierbei entweder durch Steckverrastung oder mittels Teilumspritzung des Kunststoffes, aus welchem die Polsterträger-Wand besteht, geschehen.

Für den Fall, daß der Stützkörper innen an der Polsterträger-Wand befestigt ist, bildet entsprechend der Erfindung die dem Haftkörper gegenüberliegende ebene Stützfläche des Stützkörpers selbst die Haftfläche.

Eine bevorzugte Ausführungsform entsprechend der Erfindung besteht darin, daß zwei Stützkörper mit ihren Stützflächen oder Haftflächen parallel zueinander angeordnet und über einen quer zu ihnen angeordneten Steg, ein etwa C-förmiges Gesamtbauteil bildend, miteinander verbunden sind. Die freien Enden des C-förmigen Gesamtbauteils sind bei dieser Ausführungsform, gegen Durchbiegung gesichert, in entsprechenden Aufnahmen in den Eckbereichen (z.B. einer rahmenförmigen Kopfstütze) einsteckgehaltert, insbesondere auszugssicher steckverrastet.

Entsprechend einer anderen erfindungsgemäßen Ausführungsform sind zwei Stützkörper mit ihren Stützflächen oder Haftflächen parallel zueinander angeordnet und beidendig über je einen quer zu ihnen angeordneten Steg zu einem rahmen-, bzw. Vierkantrohr- oder schachtförmigen Gesamtbauteil miteinander verbunden.

Die vorerwähnten Gesamtbauteile lassen sich zur Stabilisierung der Haftfläche auch außen an den Polsterträger-Wänden anordnen. Besonders vorteilhaft sind aber die Ausführungsformen, bei denen Stützflächen zugleich die Haftflächen insbesondere dann bilden, wenn die Gesamtbauteile innerhalb des Polsterträgers angeordnet und befestigt sind.

Eine vorteilhafte Ausführungsform besteht entsprechend der Erfindung vornehmlich darin, daß bei einem einen hohlen Schwenkraum zur Aufnahme des oberen Bereichs jeder Tragstange aufweisenden Polsterkörper eine Polsterträger-Wand mindestens einen außen zugänglichen Durchbruch zur Einsatz- und Verrastmontage des Stützkörpers, des C-förmigen oder des rahmenförmigen Gesamtbauteils aufweist.

Wenn entsprechend der Erfindung die ebene Stützfläche des Stützkörpers selbst die Haftfläche bildet, ist es vorteilhaft möglich, die Reibungsverhältnisse durch Oberflächengestaltung der Haftfläche zu beeinflussen, insbesondere den Reibschluß zu verstärken.

Innerhalb von Kunststoff-Polsterträgern angeordnete Metalleinlagen sind von stufenweise rastverstellbaren Kopfstützen an sich bekannt (vgl. DE-OS 33 39 362 und DE-OS 34 35 478). Ganz abgesehen davon, daß diese bekannten Metalleinlagen mit Rastausprägungen versehen sind, also nur eine stufenweise Rastverstellung gestatten, haben die vorbekannten Metalleinlagen keinerlei Einfluß auf die Festigkeit der Wände des aus verformungsfestem Kunststoff bestehenden Polsterträgers. Außerdem ist bei den bekannten Rastverstellungen immer eines der kooperierenden Rastbauteile unnachgiebig (z.B. ein Rastarm) und das andere nachgiebig (z.B. die Metalleinlage) oder umgekehrt. Bei jenem Stand der Technik ist die Größe der im Verstellsystem quer zur Neigeverstellebene wirkenden Federkräfte von nicht so tragender Bedeutung, da lediglich ein Formschluß in den einzelnen Raststellungen erzielt werden muß. Im vorliegenden erfindungsgemäßen Gesamtzusammenhang kommt es indes darauf an, den Polsterträger auch aus einem nachgiebigen, für einen Energieverzehr besonders günstigen Kunststoff, beispielsweise aus Polyäthylen, herstellen zu können. Bei der Verstellung selbst sollte aber keine Federrate zwischen dem Haftkörper und der Haftfläche auftreten. Es ist deshalb vorteilhaft, wenn beide miteinander kooperierenden Haftbauteile praktisch unnachgiebig sind. Eine federnde Nachgiebigkeit des Haftkörpers wäre erfindungsgemäß nur dann vorteilhaft, wenn sie zu einer im wesentlichen konstanten Normalkraft zwischen Haftkörper und Haftfläche führen würde.

Die Erfindung umfaßt selbstverständlich auch alle Anordnungen, bei denen ein Haftkörper oder mehrere Haftkörper nur einseitig oder an diametral gegenüberliegenden Seiten mit jeweils einer Haftfläche oder zwei Haftflächen zusammenwirken.

In den Zeichnungen sind bevorzugte Ausführungsbeispiele entsprechend der Erfindung näher dargestellt, es zeigen:
Fig. 1 einen rahmenförmigen Polsterträger,
Fig. 2 einen Rahmenschenkel eines rahmenförmigen Polsterträgers, zur besseren Darstellung teilweise ausgeschnitten, mit innen angeordnetem, einen ringförmigen Haftkörper aufweisendem Tragstangenaufsatz,
Fig. 3a-3c die besondere Montageweise einer aus Fig. 2 ersichtlichen Metalleinlage,
Fig. 4 den Teilbereich eines Rahmenschenkels, in Anlehnung an die Darstellung gemäß Fig. 2, jedoch mit einer unterschiedlich ausgestalteten Metalleinlage und
Fig. 5a und 5b die besondere Montageweise der aus Fig. 4 ersichtlichen Metalleinlage.

Der Körper 11 des Rahmenpolsterträgers 10 besteht aus nachgiebigem, für den Energieverzehr günstigen Kunststoff, insbesondere aus Polyäthylen.

Der Polsterträger 10 weist zwei Rahmenschenkel 12, 13 auf, welche einen oberen Rahmensteg 14 und einen unteren Rahmensteg 32 miteinander verbinden.

Insgesamt stellt der Polsterträger 10 ein Kunststoff- Spritzgußteil dar.

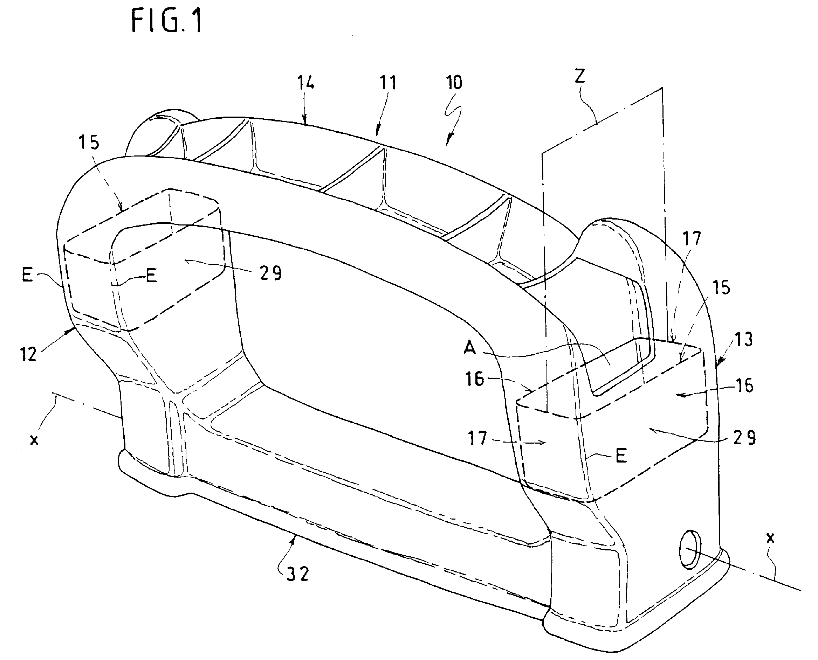

In beiden Rahmenschenkeln 12, 13 ist je eine rahmenförmige Metalleinlage 15 befestigt, welche in Fig. 1 nur gestrichelt angedeutet ist. Die rahmenförmige Metalleinlage (z.B. Stahlblecheinlage) 15 weist zwei plattenartige Stützkörper 16 auf, deren ebene Haft- bzw. Stützflächen H parallel zueinander angeordnet sind und beidendig (jeweils bei 30) über je einen quer zu ihnen angeordneten Steg 17 zu dem rahmenförmigen Gesamtbauteil 15 einstückig miteinander verbunden sind. Das so entstandene Gebilde könnte auch mit "vierkantrohrförmig" oder "schachtförmig" bezeichnet werden.

Jeder Rahmenschenkel 12, 13 bildet seinerseits einen etwa schachtförmigen Hohlraum A, welcher einen auf dem freien Ende einer nicht dargestellten Tragstange befestigten Tragstangenaufsatz 18 aus Kunststoff aufnimmt, bezüglich welchem der Polsterträger 10 entsprechend den Schwenkpfeilen U neigeverstellbar ist. Die Neigeachse ist in Fig. 1 mit x gekennzeichnet. Die Neigeverstellebene ist in Fig. 1 mit Strichlinien angedeutet und mit Z bezeichnet.

Zwischen je einem ober- und unterseitigem Anschlag 31 trägt der Tragstangenaufsatz 18 einen ringförmigen Haftkörper 19 aus Kunststoff, z.B. aus einem geeigneten Elastomer. Zwei diametral gegenüberliegende Reibflächen R des Haftkörpers 19 liegen mit einer im wesentlichen konstanten Normalkraft N an den ebenfalls flächenparallel gegenüberliegenden Haftflächen H der rahmenförmigen Metalleinlage 15 an, die zwei plattenförmige Stützkörper 16 aufweist, die beidendig über zwei Stege 17 stoffschlüssig miteinander verbunden sind. Auf diese Weise wird die Neigeverstellbewegung in Richtung der Schwenkpfeile u des Polsterträgers 10 stufenlos gehemmt und bei Stillstand hinreichend arretiert. Hierbei ist die rahmenförmige Metalleinlage 15 insgesamt so formstabil, daß sie sich unter der Wirkung der Normalkraft N nicht verbiegen kann.

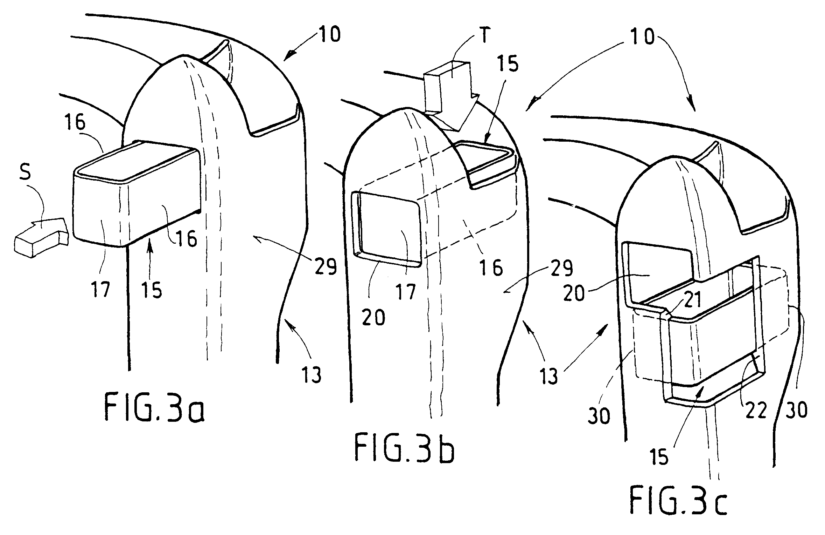

Die Montage der rahmenförmigen Metalleinlage 15 geht entsprechend den Fig. 3a-3c wie folgt vonstatten:

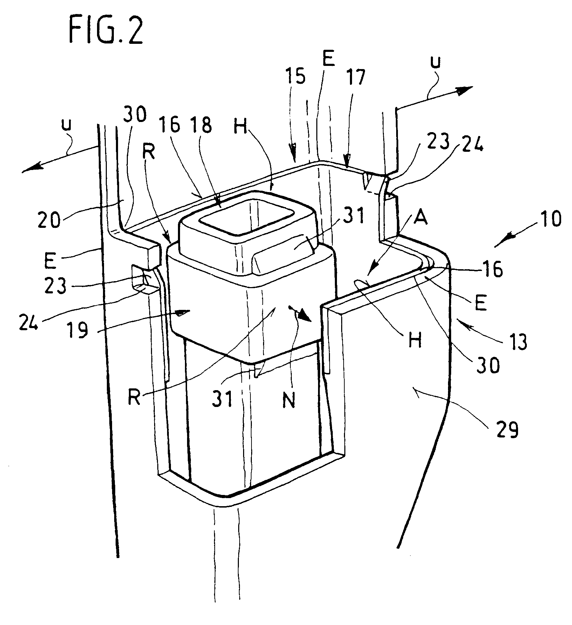

Der Rahmenschenkel 13 weist einen Montagedurchbruch 20 auf, in den die rahmenförmige Metalleinlage 15 entsprechend dem Pfeil S eingeschoben (Fig. 3a) sowie anschließend entsprechend dem Pfeil T (Fig. 3b) in die endgültige Montagelage gemäß Fig. 3c hinabgedrückt wird. Rastvorsprünge 21, 22 (dem Polsterträger 10 stoffschlüssig angeformt) halten hierbei die Metalleinlage 15 in ihrer Endlage. Gemäß Fig. 2 kann die Metalleinlage 15 mit freigestanzten Rastzungen 23 versehen sein, welche in Rastausnehmungen 24 des Rahmenschenkels 13 einrasten können.

Alle in den Zeichnungen dargestellten Metalleinlagen 15 können aus Federstahl bestehen. Jedoch ist die Metalleinlage 15 so gestaltet, so dimensioniert bzw. so am Polsterträger 10 befestigt, daß eine Durchbiegung unter Wirkung der Normalkraft N nicht eintreten kann. Auf diese Weise sind stets gleiche Reibungsverhältnisse - auch bei einem relativ weichen, insbesondere aus Polyäthylen bestehenden, Polsterträger 10 - gewährleistet.

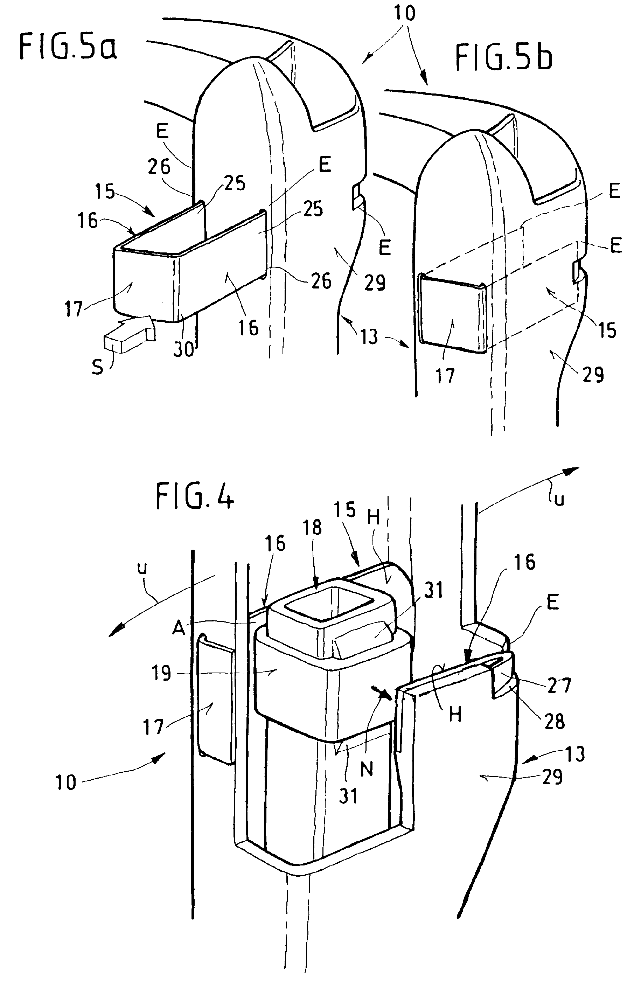

Entsprechend den Fig. 4 sowie 5a und 5b weist die Metalleinlage 15 eine C-förmige Gestalt mit zwei plattenartigen Stützkörpern 16 und einem beide verbindenden Steg 17 auf.

Gemäß Fig. 5a wird die Metalleinlage 15 mit ihren freien Enden 25 voran durch schlitzförmige Widerlager 26 in den formstabilen Eckbereichen E des Rahmenschenkels 13 hindurch bis in die endgültige Position gemäß Fig. 5b hineingeschoben. Gemäß Fig. 5b (vgl. ebenfalls Fig. 4) rasten widerhakenförmig zurückgebogene Rastzungen 27 (an beiden freien Enden 25 der C-förmigen Metalleinlage 15) in Rastaussparungen 28 des Rahmenschenkels 13 praktisch unlösbar ein. In der endgültigen Befestigungslage liegt die Innenfläche des Steges 17 der Metalleinlage 15 außen an der Außenfläche des Rahmenschenkels 13 an. Dadurch, daß auch die Rastaussparungen 28 in den besonders formstabilen Eckbereichen E des Rahmenschenkels 13 angeordnet sind, ist eine Durchbiegung der plattenartigen Elemente 16, deren beide Enden jeweils mit 30, 25 bezeichnet sind, unter der Wirkung der Normalkraft N nicht gegeben.

Die der Haftfläche H (identisch mit der jeweiligen ebenen Stützfläche eines Stützkörpers 16) bzw. der Neigeverstellebene Z jeweils etwa flächenparallele Polsterträger-Wand ist mit 29 bezeichnet.

## Patentansprüche

1. Kopfstütze für Kraftfahrzeugsitze mit einem das Kopfpolster tragenden Polsterträger aus Kunststoff, welcher mittels mindestens einer Tragstange an einer Sitzlehne gehalten und bezüglich dieser Tragstange neige- und ggf. höhenverstellbar gelagert ist, wobei der obere freie Endbereich einer jeden Tragstange mindestens einen insbesondere ringförmigen Haftkörper aus Kunststoff od.dgl. mindestens mittelbar trägt, welcher mit mindestens einer an je einer Polsterträger-Wand vorhandenen Haftfläche zusammenwirkt, dadurch gekennzeichnet, daß an der Polsterträger-Wand (29) ein die Haftfläche (H) mit einer ebenen Stützfläche stabilisierender Stützkörper (16) aus Metall oder faserverstärktem bzw. ähnlich verfestigtem Kunststoff mindestens an zwei Endbereichen (25, 30; 30, 30) quer zur Neigeverstellebene (Z) druckfest an je einem Widerlager (z.B. bei E) der Polsterträger-Wand (29) formschlüssig gehalten ist, und daß der Stützkörper (16) im Bereich seiner Stützfläche bezüglich einer vom Haftkörper (19) ausgehenden Normalkraft (N) biegesteif ist.

2. Kopfstütze nach Anspruch 1, dadurch gekennzeichnet, daß der Stützkörper (16) die benachbarte Polsterträger-Wand (29) zugleich gegen Verformung sichert.

3. Kopfstütze nach Anspruch 1 oder 2, dadurch gekennzeichnet, daß der Stützkörper (16) mit seiner Stützfläche parallel zur Haftfläche (H) außen an der Polsterträger-Wand (29) angeordnet ist.

4. Kopfstütze nach einem der vorhergehenden Ansprüche, dadurch gekennzeichnet, daß der Stützkörper (16) innen an der Polsterträger-Wand (29) angeordnet ist und mit seiner dem Haltekörper (19) gegenüberliegenden Stützfläche zugleich die Haftfläche (H) bildet.

5. Kopfstütze nach einem der vorangehenden Ansprüche, dadurch gekennzeichnet, daß der Stützkörper (16) an der Polsterträger-Wand (29) steckverrastet ist.

6. Kopfstütze nach einem der vorangehenden Ansprüche, dadurch gekennzeichnet, daß der Stützkörper (16) mindestens mittels Teilumspritzung des Kunststoffes der Polsterträger-Wand (29) an letzterer befestigt ist.

7. Kopfstütze nach einem der vorangehenden Ansprüche, dadurch gekennzeichnet, daß zwei Stützkörper (16) mit ihren Stützflächen oder Haftflächen parallel zueinander angeordnet und über einen quer zu ihnen angeordneten Steg (17), ein etwa C-förmiges Gesamtbauteil (15) bildend, miteinander verbunden sind.

8. Kopfstütze nach Anspruch 7, dadurch gekennzeichnet, daß zwei Stützkörper (16) mit ihren Stützflächen oder Haftflächen (H) parallel zueinander angeordnet sind und beidendig über je einen quer zu ihnen angeordneten Steg (17) zu einem rahmen-, vierkantrohr- oder schachtförmigen Gesamtbauteil (15) miteinander verbunden sind.

9. Kopfstütze nach einem der vorangehenden Ansprüche, dadurch gekennzeichnet, daß bei einem einen hohlen Schwenkraum (A) zur Aufnahme des oberen Bereichs (18) jeder Tragstange aufweisenden Polsterträger (10) eine Polsterträger-Wand (29) bzw. der Boden- oder der Scheitelbereich des Polsterträgers (10) mindestens eine außen zugängliche Öffnung (20) zur Einsatz- und Verrastmontage des Stützkörpers (16), des C-förmigen oder des rahmenförmigen Gesamtbauteils (15) aufweist.

## Claims

1. Head restraint for motor vehicle seats, having a plastic upholstery carrier which carries the upholstered head rest and is held on a seat back with the aid of at least one support rod and is supported so as to be inclinable and possibly height-adjustable relative to said support rod, the top free end region of each support rod at least indirectly carrying at least one, in particular annular, adhesive body made of plastic or the like, which cooperates with at least one adhesive surface provided in each case on one upholstery carrier wall, characterized in that at the upholstery carrier wall (29) a support body (16) made of metal or fibre-reinforced or similarly strengthened plastic and stabilizing the adhesive surface (H) with a plane support surface is held in a form-fit manner at least at two end regions (25, 30; 30, 30) at right angles to the plane of inclination adjustment (Z) in a compression-proof manner at in each case one abutment (e.g. at E) of the upholstery carrier wall (29), and that the support body (16) in the region of its support surface is rigid in relation to a normal force (N) emanating from the adhesive body (19).

2. Head restraint according to claim 1, characterized in that the support body (16) simultaneously protects the adjacent upholstery carrier wall (29) against deformation.

3. Head restraint according to claim 1 or 2, characterized in that the support body (16) is disposed, with its support surface parallel to the adhesive surface (H), externally on the upholstery carrier wall (29).

4. Head restraint according to one of the preceding claims, characterized in that the support body (16) is disposed internally on the upholstery carrier wall (29) and with its support surface lying opposite the adhesive body (19) simultaneously forms the adhesive surface (H).

5. Head restraint according to one of the preceding claims, characterized in that the support body (16) is inserted and locked in at the upholstery carrier wall (29).

6. Head restraint according to one of the preceding claims, characterized in that the support body (16) is fastened to the upholstery carrier wall (29) at least by means of partial injection moulding around the plastic of said upholstery carrier wall.

7. Head restraint according to one of the preceding claims, characterized in that two support bodies (16) are disposed with their support surfaces or adhesive surfaces parallel to one another and are connected to one another by a web (17) disposed at right angles to said support bodies so as to form an approximately C-shaped complete assembly (15).

8. Head restraint according to claim 7, characterized in that two support bodies (16) are disposed with their support surfaces or adhesive surfaces (H) parallel to one another and are connected to one another at either end by a web (17) disposed at right angles to said support bodies so as to form a frame-shaped, rectangular tube-shaped or shaft-shaped complete assembly (15).

9. Head restraint according to one of the preceding claims, characterized in that, given an upholstery carrier (10) having a hollow swivel area (A) for receiving the top region (18) of each support rod, an upholstery carrier wall (29) or the bottom or top region of the upholstery carrier (10) has at least one externally accessible opening (20) for the insertion and lock-in assembly of the support body (16), the C-shaped or frame-shaped complete assembly (15).

## Revendications

1. Appui-tête pour sièges de véhicules automobiles, avec un porte-rembourrage qui, réalisé en matière plastique, porte le rembourrage pour la tête, est maintenu au moyen d'au moins une barre de support sur le dossier d'un siège et est installé de manière à pouvoir être repositionné dans son inclinaison et le cas échéant, dans sa hauteur, tandis que la zone de l'extrémité libre haute de chacune des barres de support porte, au moins indirectement, au moins un corps d'adhérence en particulier de forme annulaire en matière plastique ou similaire qui coopère avec au moins une face d'adhérence ménagée sur chacune des parois du porte-rembourrage,
caractérisé par le fait que sur la paroi (29) du porte-rembourrage un corps d'appui (16) en métal ou en matière plastique armée de fibres ou renforcée de toute autre matière similaire qui stabilise la face (H) d'adhérence avec une face d'appui plane, est maintenu à deux zones d'extrémité (25, 30 ; 30, 30) au moins dans le sens transversal au plan (Z) de réglage de l'inclinaison dans des conditions résistantes à la pression sur un contre-appui (par exemple en E) de la paroi (29) du porte-rembourrage grâce à la forme géométrique des éléments en contact, et que dans la zone de sa face d'appui, le corps d'appui (16) est rigide et inflexible sous l'action d'une force normale (N) émanant du corps (19) d'adhérence.

2. Appui-tête suivant la revendication 1,
caractérisé par le fait que le corps d'appui (16) assure en même temps contre la déformation la paroi (29) mitoyenne du porte-rembourrage.

3. Appui-tête suivant la revendication 1 ou 2,
caractrisé par le fait que le corps d'appui (16) est placé à l'extérieur de la paroi (29) du porte-rembourrage, sa face d'appui s'étendant parallèlement à la face (H) d'adhérence.

4. Appui-tête suivant l'une des revendications précédentes,
caractérisé par le fait que le corps d'appui (16) est placé à l'intérieur sur la paroi (29) du porte-rembourrage et forme en même temps la face (H) d'adhérence avec sa face d'appui placée en opposition face au corps d'adhérence (19).

5. Appui-tête suivant l'une des revendications précédentes,
caractérisé par le fait que le corps d'appui (16) est enfiché et cranté dans la paroi (29) du porte-rembourrage.

6. Appui-tête suivant l'une des revendications précédentes,
caractérisé par le fait que le corps d'appui (16) est fixé à la paroi (29) du porte-rembourrage au moins au moyen d'un enrobage partiel par injection de la matière plastique dont se compose ladite paroi.

7. Appui-tête suivant l'une des revendications précédentes,
caractérisé par le fait que deux corps d'appui (16) sont disposés pour que leurs faces d'appui respectivement leurs faces d'adhérence se placent parallèlement les unes aux autres, et sont reliés l'un à l'autre par l'intermédiaire d'un champ transverse (17) disposé entre eux pour former ainsi un ensemble d'assemblage (15) à peu près en forme de C.

8. Appui-tête suivant la revendication 7,
caractérisé par le fait que deux corps d'appui (16) sont disposés pour que leurs faces d'appui ou leurs faces (H) d'adhérence se placent parallèlement les unes aux autres, et sont reliés l'un à l'autre à chacune de leurs deux extrémités par l'intermédiaire d'un champ transverse (17) disposé entre eux en un ensemble d'assemblage (15) ayant la forme d'un cadre, d'un tube de section rectangulaire ou d'une gaine.

9. Appui-tête suivant l'une des revendications précédentes,
caractérisé par le fait qu'avec un porte-rembourrage (10) présentant une cavité (A) creuse de pivotement destinée à loger la partie haute (18) de chacune des barres de support, une paroi (29) ou la zone de la base ou de la crête du porte-rembourrage (10) présente au moins une échancrure (20) accessible de l'extérieur pour permettre d'insérer et de monter par crantage le corps d'appui (16) et l'ensemble d'assemblage (15) en forme de C ou en forme de cadre.
